(19)

Europäisches
Patentamt
European
Patent Office
Office européen
des brevets

(11)  EP 4 597 175 A1

(12)  **EUROPEAN PATENT APPLICATION**
published in accordance with Art. 153(4) EPC

(43) Date of publication:
06.08.2025  Bulletin 2025/32

(21) Application number: 23870861.4

(22) Date of filing: 26.09.2023

(51) International Patent Classification (IPC):
*G01W 1/00* (2006.01)    *G01W 1/02* (2006.01)

(52) Cooperative Patent Classification (CPC):
G01J 1/00; G01J 1/02; G01W 1/00; G01W 1/02

(86) International application number:
PCT/CN2023/121731

(87) International publication number:
WO 2024/067634 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  27.09.2022  CN 202211185136

(71) Applicant: Trina Solar Co., Ltd.
Changzhou, Jiangsu 213001 (CN)

(72) Inventors:
• SUN, Kai
  Changzhou, Jiangsu 213001 (CN)
• ZHAO, Ming
  Changzhou, Jiangsu 213001 (CN)
• QUAN, Peng
  Changzhou, Jiangsu 213001 (CN)
• HUANG, Guokun
  Changzhou, Jiangsu 213001 (CN)

(74) Representative: Winter, Brandl - Partnerschaft
mbB
Alois-Steinecker-Straße 22
85354 Freising (DE)

(54)  **METHOD AND DEVICE FOR IDENTIFYING WEATHER STATE BY MEANS OF MULTIPLE IRRADIATION METERS**

(57)    A method for determining a weather condition, comprising: measuring horizontal irradiance; measuring first slope irradiance and second slope irradiance, a first slope and a second slope being arranged to face the sun and being symmetrical about the meridian plane; determining an azimuth irradiation deviation rate according to the horizontal irradiance, the first slope irradiance, and the second slope irradiance; and determining a weather condition according to the horizontal irradiance, the first slope irradiance, the second slope irradiance, and the azimuth irradiation deviation rate. Also provided is a device for determining a weather condition.

Fig. 1

EP 4 597 175 A1

## Description

### Technical Field

Embodiments of the present disclosure relate to the field of meteorology, and more specifically, to a method and device for identifying weather condition by means of multiple pyranometers.

### Background

Globally, the proportion of renewable energy is gradually increasing, with photovoltaic (PV) power generation leading the global energy revolution. It is estimated that by 2050, PV power generation capacity could reach 8.5 terawatts (TW). Currently, PV installation brackets are basically categorized into fixed-tilt type and tracking type, with tracking brackets gaining widespread development in recent years due to their advantages such as lower cost per kilowatt-hour and higher return on investment (ROI). Horizontal single-axis tracking brackets dominate the market due to their characteristics such as simple and practical structure, significant power generation gain, etc.

Conventional horizontal single-axis tracking PV systems typically integrate astronomical algorithms and flat ground backtracking algorithms, wherein the astronomical algorithm calculates the relative position of the sun (i.e., the incident angle of sunlight) based on the Earth-sun relationship by obtaining local latitude, longitude, time and other information; and determines the horizontal single axis theoretical tracking angle according to the principle that the smaller the angle between the normal vector of the component and the incident sunlight, the higher the irradiation received by the component.

However, conventional tracking algorithms only consider maximizing the irradiation received by the component in high direct irradiation (or irradiance) weather condition (clear days). In high diffuse irradiation (or irradiance) weather condition (overcast days), the tracking brackets still rotate according to conventional tracking algorithms, failing to make good user of diffuse irradiation and fully utilize the power generation advantage of the tracking brackets. Therefore, distinguishing different weather condition and applying corresponding angle optimization is a future development trend in tracking algorithms.

### Summary of the Invention

To solve the above problems, embodiments of the present disclosure provide a method and device for determining weather condition.

At least one embodiment of the present disclosure provides a method for determining weather conditions, comprising:

measuring a horizontal irradiance;
measuring a first slope irradiance and a second slope irradiance, wherein the first and second slopes are arranged to face the sun symmetrically with respect to the meridian plane;
determining an azimuth irradiation deviation rate according to the horizontal irradiance, the first slope irradiance, and the second slope irradiance; and
determining a weather condition according to the horizontal irradiance, the first slope irradiance, the second slope irradiance and the azimuth irradiation deviation rate.

In one embodiment of the present disclosure, determining the azimuth irradiation deviation rate according to the horizontal irradiance, the first slope irradiance, and the second slope irradiance comprises:
determining the ratio of the absolute value of the difference between the first and second slope irradiances to the horizontal irradiance as the azimuth irradiation deviation rate D.

In one embodiment of the present disclosure, determining the weather condition according to the horizontal irradiance, the first slope irradiance, the second slope irradiance and the azimuth irradiation deviation rate comprises:
determining the weather condition as overcast or rainy, when the horizontal irradiance is greater than both the first and second slope irradiances, and the azimuth irradiation deviation rate D < 5%.

In one embodiment of the present disclosure, the method further comprises:

calculating a first theoretical slope irradiance and a second theoretical slope irradiance according to a slope irradiation calculation model, respectively, based on the horizontal irradiance and a direct irradiation proportion within a predefined range, when the conditions that the horizontal irradiance is greater than both the first and second slope irradiances and the azimuth irradiation deviation rate D < 5% is not met;
determining an azimuth irradiation theoretical deviation rate $D_{theo.}$ of the first theoretical slope irradiance and the second theoretical slope irradiance based on the first and second theoretical slope irradiances, and determining an azimuth irradiation actual deviation rate $D_{act.}$ based on the first and second slope irradiances;
determining the weather condition as clear, when the azimuth irradiation actual deviation rate $D_{act.}$ is greater than the azimuth irradiation theoretical deviation rate $D_{theo.}$; and determining the weather condition as cloudy, when the azimuth irradiation actual deviation rate $D_{act.}$ is less than or equal to the azimuth irradiation theoretical deviation rate $D_{theo.}$.

In one embodiment of the present disclosure, the predefined range is greater than or equal to 50% and less than or equal to 60%.

In one embodiment of the present disclosure, the direct irradiation proportion is 50%. In one embodiment of the present disclosure, the method further comprises:

calculating a first theoretical slope irradiance and a second theoretical slope irradiance at different direct irradiation proportions according to a slope irradiation calculation model, respectively, based on the horizontal irradiance and a plurality of direct radiation proportions uniformly distributed within the range of 0 to 100%, when the conditions that the horizontal irradiance is greater than both the first and second slope irradiances and the azimuth irradiation deviation rate $D < 5\%$ is not met;
determining a azimuth irradiation theoretical deviation rate $D_{theo.}$ at different direct irradiation proportions according to the first and second theoretical slope irradiances at the different direct irradiation proportions and the horizontal irradiance;
selecting an azimuth irradiation theoretical deviation rate $D_{theo.}$ closest to the azimuth irradiation deviation rate, and determining a direct irradiation proportion corresponding to the selected azimuth irradiation theoretical deviation rate as an actual direct irradiation proportion; and
determining the weather condition according to the actual direct irradiation proportion.

In one embodiment of the present disclosure, determining the current weather condition according to the actual direct irradiation proportion comprises:

determining the weather condition as clear, when the actual direct irradiation proportion is greater than a first threshold; and
determining the weather condition as overcast or rainy, when the actual direct irradiation proportion is less than a second threshold; and
determining the weather condition as cloudy, when the actual direct irradiation proportion is less than or equal to the first threshold and greater than or equal to the second threshold.

In one embodiment of the present disclosure, the first threshold is 50%, and the second threshold is 10%.
At least one embodiment of the present disclosure also provides a device for determining weather conditions, comprising:

a first pyranometer configured to measure a horizontal irradiance, wherein a measuring surface of the first pyranometer is arranged to be horizontally placed;
a second pyranometer configured to measure a first slope irradiance;
a third pyranometer configured to measure a second slope irradiance, wherein the measuring surface of the second pyranometer and a measuring surface of the third pyranometer are arranged to face the sun symmetrically with respect to the meridian plane; and
a processing unit configured to receive the horizontal irradiance, the first slope irradiance, and the second slope irradiance, determine the azimuth irradiation deviation rate according to the horizontal irradiance, the first slope irradiance and the second slope irradiance, and determine a weather condition according to the horizontal irradiance, the first slope irradiance, the second slope irradiance and the azimuth irradiation deviation rate.

In one embodiment of the present disclosure, the processing unit is further configured to determine the ratio of the absolute value of the difference between the first and second slope irradiances to the horizontal irradiance as the azimuth irradiation deviation rate.
In one embodiment of the present disclosure, the processing unit is further configured to compare the horizontal irradiance with the first slope irradiance and compare the horizontal irradiance with the second slope irradiance, respectively, and the processing unit determines the weather condition as overcast or rainy, when the horizontal irradiance is greater than both the first and second slope irradiances, and the azimuth irradiation deviation rate is less than 5%.
In one embodiment of the present disclosure, the processing unit is further configured to calculate a first theoretical slope irradiance and a second theoretical slope irradiance according to a slope irradiation calculation model, respectively, based on the horizontal irradiance and a direct irradiation proportion within a predefined range, when the condition that the horizontal irradiance is greater than both the first and second slope irradiances and the azimuth irradiation deviation rate is less than 5% is not met;

determine an azimuth irradiation theoretical deviation rate $D_{theo.}$ of the first theoretical slope irradiance and the second theoretical slope irradiance based on the first and second theoretical slope irradiances, and determine an azimuth irradiation actual deviation rate $D_{act.}$ based on the first and second slope irradiances;

determine the weather condition as clear, when the azimuth irradiation actual deviation rate $D_{act.}$ is greater than the azimuth irradiation theoretical deviation rate $D_{theo.}$; and determine the weather condition as cloudy, when the azimuth irradiation actual deviation rate $D_{act.}$ is less than or equal to the azimuth irradiation theoretical deviation rate $D_{theo.}$.

In one embodiment of the present disclosure, the predefined range is greater than or equal to 50% and less than or equal to 60%.

In one embodiment of the present disclosure, the direct irradiation proportion is 50%.

In one embodiment of the present disclosure, the processing unit is further configured to calculate a first theoretical slope irradiance and a second theoretical slope irradiance at different direct irradiation proportions according to a slope irradiation calculation model, respectively, based on the horizontal irradiance and a plurality of direct radiation proportions uniformly distributed within the range of 0 to 100%, when the condition that the horizontal irradiance is greater than both the first and second slope irradiances and the azimuth irradiation deviation rate is less than 5% is not met;

determine the azimuth irradiation theoretical deviation rate $D_{theo.}$ at different direct irradiation proportions according to the first and second theoretical slope irradiances at the different direct irradiation proportions;

select an azimuth irradiation theoretical deviation rate $D_{theo.}$ closest to the azimuth irradiation deviation rate, and determine a direct irradiation proportion corresponding to the selected azimuth irradiation theoretical deviation rate $D_{theo.}$ as an actual direct irradiation proportion; and

determine a current weather condition according to the actual direct irradiation proportion.

In one embodiment of the present disclosure, the processing unit is configured to determine the current weather condition according to the actual direct radiation proportion, particularly, the processing unit is configured to determine the weather condition as clear, when the actual direct irradiation proportion is greater than a first threshold; and determine the weather condition as overcast or rainy, when the actual direct irradiation proportion is less than a second threshold; and determine the weather condition as cloudy, when the actual direct irradiation proportion is less than or equal to the first threshold and greater than or equal to the second threshold.

In one embodiment of the present disclosure, the first threshold is 50%; and the second threshold is 10%.

In one embodiment of the present disclosure, the device further comprises a fourth pyranometer and a fifth pyranometer, wherein:

the fourth pyranometer is arranged to be symmetrical with the second pyranometer about a plane that is perpendicular to the horizontal plane and parallel to the latitude line.

the fifth pyranometer is arranged to be symmetrical with the third pyranometer about a plane that is perpendicular to the horizontal plane and parallel to the latitude line;

wherein, the processing unit uses the measurement data of the fourth pyranometer as the first slope irradiance and the measurement data of the fifth pyranometer as the second slope irradiance, respectively, when both the second and third pyranometers are facing away from the sun.

In one embodiment of the present disclosure, the device further comprises a rotating mechanism. The second and third pyranometers are arranged on the rotating mechanism. When both the second and third pyranometers are facing away from the sun, the rotating mechanism drives the second and third pyranometers to rotate by 180 degrees in the horizontal plane so as to face the sun again.

Embodiments of the present disclosure provide a method and device for determining weather conditions, wherein by using multiple pyranometers, the irradiation conditions in different orientations are measured, and then the weather condition is identified according to the irradiation deviation rates in the different orientations. The weather condition is determined simultaneously with the measurement of the irradiance data, so that the diversity of the device's functionality is enhanced, the manufacturing and installation are simplified, along with low maintenance costs. At the same time, it is suitable for all latitudes and seasons, has low costs, high feasibility, and can be widely applied in engineering practice.

## Brief Description of the Drawings

Figure 1 shows a flowchart of the method for determining weather conditions according to one embodiment of the present disclosure;
Figure 2 shows the relationship between the azimuth irradiance deviation and the direct irradiation proportion;
Figure 3 shows a block diagram of the device for determining weather conditions according to one embodiment of the present disclosure; and
Figure 4 shows a structural diagram of the device for determining weather conditions according to another embodiment of the present disclosure.

## Detailed Description

The following detailed explanation of the present application is provided through the accompanying drawings and embodiments. Through these descriptions, the features and advantages of the present application will become more clearly defined.

The term "exemplary" used here means "serving as an example, embodiment, or illustration." Any embodiment described here as "exemplary" should not be interpreted as being superior or better than other embodiments. Although various aspects of the embodiments are shown in the drawings, they need not be drawn to scale unless specifically indicated.

Furthermore, the technical features in different embodiments of the present application described below can be combined with each other if they do not conflict.

Currently, weather stations with dual axis tracking systems, such as Kipp&Zonen's RaZON+ integrated solar monitoring system, can collect horizontal total irradiance, horizontal diffuse irradiance and horizontal direct irradiance, etc. by tracking the sun's position on dual axes, thereby the current weather condition can be evaluated. However, these systems come with high equipment costs, require high tracking accuracy, exhibit higher failure and error rates, and necessitate regular calibration, which limits their practical application.

To address this, embodiments of the present disclosure provide a method and device for determining weather conditions, wherein by using multiple pyranometers, the irradiation conditions in different orientations are measured, and then a weather condition is identified according to the irradiation deviation rates in the different orientations. The weather condition is determined simultaneously with the measurement of the irradiance data, so that the diversity of the device's functionality is enhanced, the manufacturing and installation are simplified, along with low maintenance costs. At the same time, it is suitable for all latitudes and seasons, has low costs, high feasibility, and can be widely applied in engineering practice.

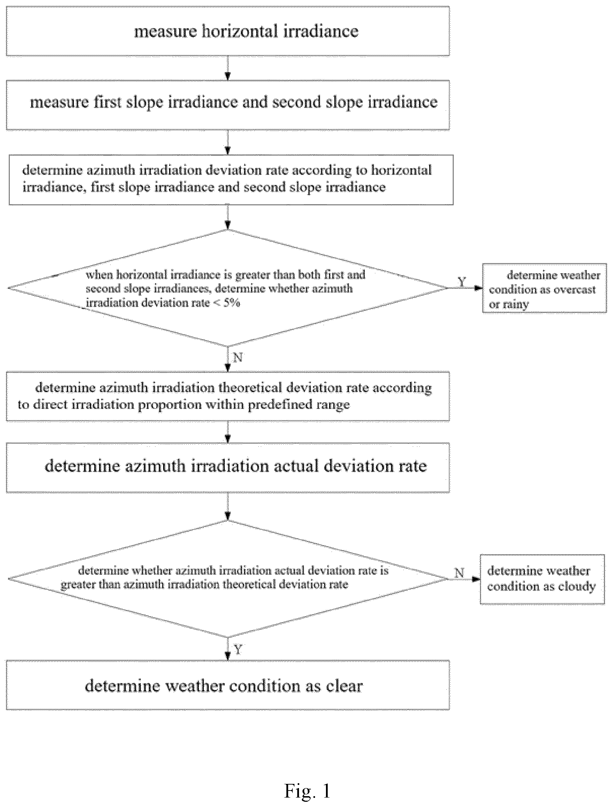

At least one embodiment of the present disclosure provides a method for determining weather conditions, as shown in Figure 1, comprising:

measuring a horizontal irradiance;
measuring a first slope irradiance and a second slope irradiance, wherein the first and second slopes are arranged to face the sun symmetrically with respect to the meridian plane, and have the same tilt angle;
determining an azimuth irradiation deviation rate according to the horizontal irradiance, the first slope irradiance, and the second slope irradiance; and
determining a weather condition according to the horizontal irradiance, the first slope irradiance, the second slope irradiance and the azimuth irradiation deviation rate.

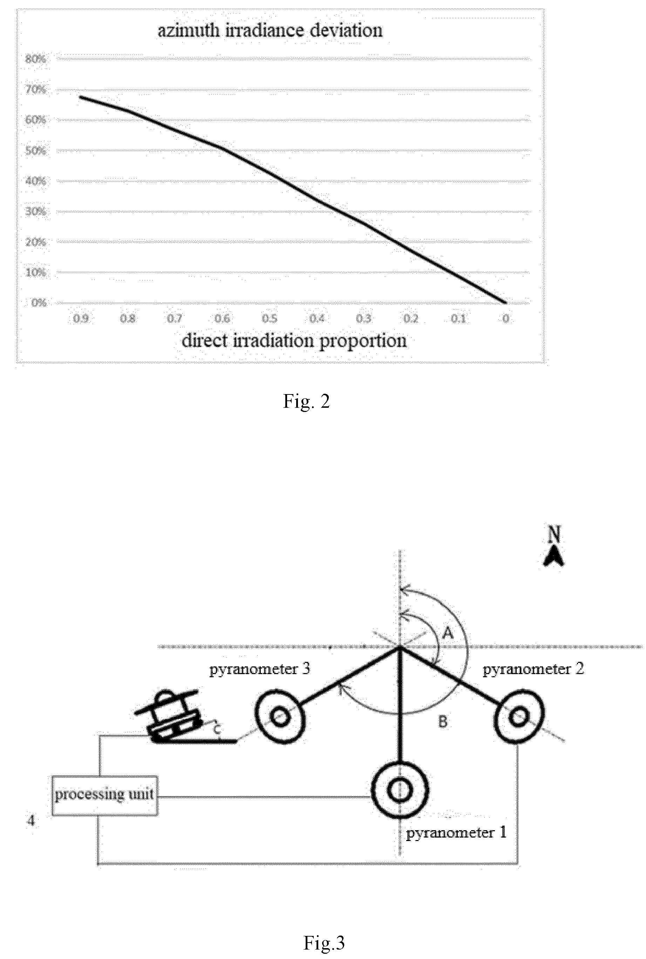

The weather condition can be determined by using the horizontal irradiance, the first slope irradiance and the second slope irradiance, wherein the first and second slopes are arranged to face the sun symmetrically with respect to the meridian plane, and have the same tilt angle. Under different weather conditions, the distribution of directional radiation in the sky varies, that is, the horizontal irradiance differs from the first and second slope irradiances. As the weather condition becomes closer to clear day, the difference in azimuth irradiances becomes greater; as the weather condition becomes closer to overcast, the difference in azimuth irradiances becomes smaller. That is, the difference in azimuth irradiance (also known as the azimuth irradiance deviation) exhibits a monotonic correlation with the direct irradiation proportion, as shown in Figure 2.

A horizontal irradiance can be measured by using a horizontally arranged first pyranometer, a first slope irradiance can be measured by using a second pyranometer arranged on the first slope, and a second slope irradiance can be measured by using a third pyranometer arranged on the second slope. Figure 3 shows the setup of the first pyranometer (i.e., pyranometer 1), the second pyranometer (i.e., pyranometer 2) and the third pyranometer (i.e.,

pyranometer 3). As shown in Figure 3, the first and second slopes are arranged to orient toward the equator (i.e., face the sun to receive solar irradiation). The azimuth angle of the first slope is A, and the azimuth angle of the second slope is B, wherein the sum of the azimuth angles of the first and second slopes is 360 degrees, and the tilt angles of the first and second slopes are the same, that is, the angle between the first slope and the horizontal ground is the same as the angle between the second slope and the horizontal ground, and the first and second slopes are arranged to face the sun symmetrically with respect to the meridian plane.

For example, in high-latitude regions of the Northern Hemisphere (north of the Tropic of Cancer, where the sun is always to the south), the azimuth angle of the first slope is 60 degrees south by east, and the azimuth angle of the second slope is 60 degrees south by west, with both tilt angles being 20 degrees. For another example, in high-latitude regions of the Southern Hemisphere (south of the Tropic of Capricorn, where the sun is always to the north), the azimuth angle of the first slope is 60 degrees north by east, and the azimuth angle of the second slope is 60 degrees north by west, with both tilt angles being 20 degrees. Further, in low-latitude regions of both hemispheres, as to the second and third pyranometers for measuring the first slope irradiance and the second slope irradiance, regardless of how they are arranged-whether oriented north by east, north by west, south by east, or south by west-as the direct point of the sun moves between the Tropic of Cancer and the Tropic of Capricorn, for both the second and third pyranometer there will be times when they are facing away from the sun. In such cases, it is necessary to arrange a fourth pyranometer and a fifth pyranometer which are symmetric to the second pyranometer and the third pyranometer along the latitude line, respectively, and measure the first and second slope irradiances when the second and third pyranometers are facing away from the sun, so that the applicable area of the method for determining weather conditions according to an embodiment of the present disclosure can be expanded.

In one embodiment of the present disclosure, determining an azimuth irradiation deviation rate according to the horizontal irradiance, the first slope irradiance and the second slope irradiance comprises: determining the ratio of the absolute value of the difference between the first and second slope irradiances to the horizontal irradiance as the azimuth irradiation deviation rate D.

The closer the weather condition is to clear day, the greater the difference in azimuth irradiances, and the closer the weather condition to overcast or rainy day, the smaller the difference in azimuth irradiances. Thus, when the difference between the first and second slope irradiances is small, and the horizontal irradiance is greater than both the first and second slope irradiances, the weather condition will be closer to overcast or rainy condition. Actual measurement data show that the weather condition is overcast or rainy, when the horizontal irradiance is greater than both the first and second slope irradiances, and the azimuth irradiation deviation rate D is less than 5%.

Therefore, in one embodiment of the present disclosure, determining the weather condition according to the horizontal irradiance, the first slope irradiance, the second slope irradiance and the azimuth irradiation deviation rate comprises:

determining the weather condition as overcast or rainy, when the horizontal irradiance is greater than both the first and second slope irradiances, and the azimuth irradiation deviation rate D < 5%.

By establishing the relationship between the horizontal irradiance and the first and second slope irradiances, the weather condition can be quickly determined without the need of expensive precise equipment.

As can be seen from the above, the weather condition can be determined as clear or cloudy, when the condition that the horizontal irradiance is greater than both the first and second slope irradiances and the azimuth irradiation deviation rate D is less than 5% is not met. In such cases, based on the horizontal irradiance and a direct irradiation proportion (for example, 50%) within a predefined range (for example, 50-60%), a first theoretical slope irradiance and a second theoretical slope irradiance are calculated according to a slope irradiation calculation model:

$$I_{slope} = I_n * R_b + I_d * R_d + \frac{1-\cos(a)}{2}(I_d + I_n) * \rho$$

, respectively, wherein In represents the horizontal direct irradiance, Id represents the horizontal diffuse irradiance, $\rho$ represents the ground reflectance, $R_b = \frac{\cos\theta_i}{\cos\theta_z}$ , wherein $\theta_z$ represents the solar zenith angle, $\theta_i$ represents the solar incidence angle,

$$\cos\theta_z = \sin\varphi\sin\delta + \cos\varphi\cos\delta\cos\omega,$$

$$\cos\theta_i = \sin\varphi\sin\delta\cos a - \cos\varphi\sin\delta\sin a\cos\gamma + \cos\varphi\cos\delta\cos a\cos\omega + \cos\delta\sin\varphi\sin a\cos\gamma\cos\omega + \cos\delta\sin a\sin\gamma\sin\omega,$$

where ω represents the solar hour angle, δ represents the declination angle, φ represents the latitude, γ represents the azimuth angle of the slope, and a represents the tilt angle of the slope;

$$R_d = F_{Hay} * R_b + \ \left(1 - F_{Hay}\right) \ \left(\frac{1+\cos(a)}{2} * \frac{2}{3} + \frac{1}{3} * \frac{180-a}{180}\right)$$

, wherein $F_{Hay}$ is the sky clearness factor. The clearness factor, also known as clearness index, is a comprehensive parameter that describes the effect of the atmosphere on solar shortwave radiation. It not only reflects the intensity of solar radiation reaching the ground, but also indicates the atmospheric conditions and the impact on solar radiation as the solar radiation passes through the atmosphere.

After calculating the first and second theoretical slope irradiances by means of the above-mentioned calculation model, the ratio of the absolute value of the difference between the first theoretical slope irradiance and the second theoretical slope irradiance to the horizontal irradiance is determined as an azimuth irradiation theoretical deviation rate $D_{theo.}$; and the ratio of the absolute value of the difference between the first slope irradiance and the second slope irradiance to the horizontal irradiance is determined as an azimuth irradiation actual deviation rate $D_{act.}$, based on the first and the second slope irradiances. Experimental data shows that the weather condition is clear, when the azimuth irradiation actual deviation rate $D_{act.}$ is greater than the azimuth irradiation theoretical deviation rate $D_{theo.}$; and the weather condition is cloudy, when the azimuth irradiation actual deviation rate $D_{act.}$ is less than or equal to the azimuth irradiation theoretical deviation rate $D_{theo.}$.

Therefore, in one embodiment of the present disclosure, when the condition that the horizontal irradiance is greater than both the first and second slope irradiances and the azimuth irradiation deviation rate D is less than 5% is not met, based on the horizontal irradiance and a direct irradiation proportion (for example, 50%) within a predefined range (for example, 50-60%), first and second theoretical slope irradiances are calculated according to a slope irradiation calculation model: $$I_{slope} = I_n * R_b + I_d * R_d + \frac{1-\cos(a)}{2}(I_d + I_n) * \rho$$ , respectively, wherein In represents the horizontal direct irradiance, Id represents the horizontal diffuse irradiance, ρ represents the ground reflectance, $R_b = \frac{\cos\theta_i}{\cos\theta_z}$ , wherein $\theta_z$ represents the solar zenith angle, $\theta_i$ represents the solar incidence angle,

$$\cos\theta_z = \sin\varphi\sin\delta + \cos\varphi\cos\delta\cos\omega,$$

$$\cos\theta_i = \sin\varphi\sin\delta\cos a - \cos\varphi\sin\delta\sin a\cos\gamma + \cos\varphi\cos\delta\cos a\cos\omega + \cos\delta\sin\varphi\sin a\cos\gamma\cos\omega + \cos\delta\sin a\sin\gamma\sin\omega,$$

where ω represents the solar hour angle, δ represents the declination angle, φ represents the latitude, γ represents the azimuth angle of the slope, and a represents the tilt angle of the slope;

$$R_d = F_{Hay} * R_b + \ \left(1 - F_{Hay}\right) \ \left(\frac{1+\cos(a)}{2} * \frac{2}{3} + \frac{1}{3} * \frac{180-a}{180}\right)$$

, wherein $F_{Hay}$ is the sky clearness factor.

According to the first and second theoretical slope irradiances, the ratio of the absolute value of the difference between the first theoretical slope irradiance and the second theoretical slope irradiance to the horizontal irradiance is determined as an azimuth irradiation theoretical deviation rate $D_{theo}$; and according to the first and second slope irradiances, the ratio of the absolute value of the difference between the first slope irradiance and the second slope irradiance to the horizontal irradiance is determined as an azimuth irradiation actual deviation rate $D_{act.}$;

The weather condition is determined as clear, when the azimuth irradiation actual deviation rate $D_{act.}$ is greater than the azimuth irradiation theoretical deviation rate $D_{theo.}$; and the weather condition is determined as cloudy, when the azimuth irradiation actual deviation rate $D_{act.}$ is less than or equal to the azimuth irradiation theoretical deviation rate $D_{theo}$.

In one embodiment of the present disclosure, the predefined range is greater than or equal to 50% and less than or equal to 60%.

In one embodiment of the present disclosure, the direct irradiation proportion is 50%.

In the above embodiment, taking a direct irradiation proportion (for example, 50%) within a predefined range (for example, 50-60%) as an example, it is illustrated how to determine the weather condition according to the horizontal irradiance, the first slope irradiance, the second slope irradiance and the azimuth irradiation actual deviation rate, when the condition that the horizontal irradiance is greater than both the first and second slope irradiances and the azimuth irradiation deviation rate D is less than 5% is not met.

In a more practical embodiment, even if the proportion of the horizontal direct irradiance In in the total irradiance is unknown, the weather condition can still be determined according to the horizontal irradiance, the first slope irradiance, the second slope irradiance and the azimuth irradiation deviation rate.

When the proportion of the horizontal direct irradiance In in the total irradiance is unknown, based on a plurality of direct radiation proportions uniformly distributed within the range of 0 to 100% (for example, assuming that the proportion of the horizontal direct irradiance In in the total irradiation is 0%, 10%, 20%, 30%, 40%, 50%, 60%, 70%, 80%, and 90%, respectively), the first and second theoretical slope irradiances can be calculated according to the slope irradiation calculation model, respectively; the azimuth irradiation theoretical deviation rates $D_{theo.}$ at different proportions of the horizontal direct irradiance in the total irradiance can be calculated according to the calculated first theoretical slope irradiance, the calculated second theoretical slope irradiance and the horizontal irradiance, respectively; and the azimuth irradiation actual deviation rate $D_{act.}$ can be determined according to the measured horizontal irradiance, the first slope irradiance and the second slope irradiance; an azimuth irradiation theoretical deviation rate $D_{theo.}$ closest to the azimuth irradiation deviation rate is selected, and the direct irradiation proportion corresponding to this selected azimuth irradiation theoretical deviation rate $D_{theo}$ is determined as an actual direct irradiation proportion. For precise determination of the actual direct irradiation proportion, a precise direct irradiation proportion can be obtained by using the difference method. Using the difference method can reduce the computational burden. Of course, it is also possible to obtain a precise direct irradiation proportion by reducing the interval between the direct irradiation proportions, determining the azimuth irradiation theoretical deviation rate at different direct irradiation proportions, respectively, and comparing them with the azimuth irradiation actual deviation rate.

Once a specific direct irradiation proportion is obtained, a current weather condition can be evaluated. For example, if the direct irradiation proportion is 30%, the current weather condition is determined as cloudy; if the direct irradiation proportion is 70%, the current weather condition is determined as clear.

Therefore, in one embodiment of the present disclosure, when the condition that the horizontal irradiance is greater than both the first and second slope irradiances and the azimuth irradiation deviation rate D is less than 5% is not met, based on the horizontal irradiance and a plurality of direct radiation proportions uniformly distributed within the range of 0 to 100%, a first theoretical slope irradiance and a second theoretical slope irradiances at different direct radiation proportions are calculated according to a slope irradiation calculation model: $I_{slope} =$

$$I_n * R_b + I_d * R_d + \frac{1-\cos(a)}{2}(I_d + I_n) * \rho$$ , respectively, wherein In represents the horizontal direct irradiance, Id represents the horizontal diffuse irradiance, $\rho$ represents the ground reflectance, $R_b = \frac{\cos\theta_i}{\cos\theta_z}$ , wherein $\theta_z$ represents the solar zenith angle, $\theta_i$ represents the solar incidence angle, and the different direct irradiation proportions refer to different values of In/ (In+Id),

$$\cos\theta_z = \sin\varphi\sin\delta + \cos\varphi\cos\delta\cos\omega,$$

$$\cos\theta_i = \sin\varphi\sin\delta\cos a - \cos\varphi\sin\delta\sin a\cos\gamma + \cos\varphi\cos\delta\cos a\cos\omega +$$
$$\cos\delta\sin\varphi\sin a\cos\gamma\cos\omega + \cos\delta\sin a\sin\gamma\sin\omega,$$

where $\omega$ represents the solar hour angle, $\delta$ represents the declination angle, $\varphi$ represents the latitude, $\gamma$ represents the azimuth angle of the slope, and a represents the tilt angle of the slope;

$$R_d = F_{Hay} * R_b + (1 - F_{Hay}) \ (\frac{1+\cos(a)}{2} * \frac{2}{3} + \frac{1}{3} * \frac{180-a}{180})$$ , wherein $F_{Hay}$ is the sky clearness factor;

The ratio of the difference between the first theoretical slope irradiance and the second theoretical slope irradiance at different direct irradiation proportions to the horizontal irradiance is determined as an azimuth irradiation theoretical deviation rate $D_{theo.}$ at the different direct irradiation proportions;

An azimuth irradiation theoretical deviation rate $D_{theo.}$ closest to the azimuth irradiation deviation rate is selected, and a direct irradiation proportion corresponding to this selected azimuth irradiation theoretical deviation rate $D_{theo.}$ is determined as an actual direct irradiation proportion, and a weather condition is determined according to the actual direct irradiation proportion.

In one embodiment of the present disclosure, determining the current weather condition according to the actual direct irradiation proportion comprises: determining the weather condition as clear when the actual direct irradiation proportion is greater than a first threshold; determining the weather condition as overcast or rainy when the actual direct irradiation proportion is less than a second threshold; and determining the weather condition as cloudy when the actual direct irradiation proportion is between the first and second thresholds. For example, the first threshold is 50%, and the second threshold is 10%.

By calculating an azimuth irradiation theoretical deviation rate $D_{theo.}$ at different direct irradiation proportions and selecting an azimuth irradiation theoretical deviation rate $D_{theo.}$ closest to the azimuth irradiation deviation rate, the direct irradiation proportion corresponding to this selected azimuth irradiation theoretical deviation rate is determined as an actual direct irradiation proportion, and an weather condition is determined according to the actual direct irradiation proportion, thereby the applicability of the method for determining weather condition according to the embodiments of the present disclosure and the correctness of the results are improved.

At least one embodiment of the present disclosure also provides a device for determining weather conditions, comprising:

a first pyranometer configured to measure a horizontal irradiance, wherein the measureing surface of the first pyranometer is arranged to be horizontally placed;
a second pyranometer configured to measure a first slope irradiance;
a third pyranometer configured to measure a second slope irradiance, wherein the measuring surface of the second pyranometer and a measuring surface of the third pyranometer are arranged to face the sun symmetrically with respect to the meridian plane; and
a processing unit configured to receive the horizontal irradiance, the first slope irradiance, and the second slope irradiance, determine the azimuth irradiation deviation rate according to the horizontal irradiance, the first slope irradiance and the second slope irradiance, and determine a weather condition according to the horizontal irradiance, the first slope irradiance, the second slope irradiance and the azimuth irradiation deviation rate.

Figure 3 shows a schematic diagram of the structure of a device for determining weather conditions according to an embodiment of the present disclosure. As shown in Figure 3, the device comprises a first pyranometer 1 (i.e., pyranometer 1), a second pyranometer 2 (i.e., pyranometer 2), and a third pyranometer 3 (i.e., pyranometer 3). The measuring surface of the first pyranometer 1 is arranged to be horizontally placed. The measuring surfaces of the second pyranometer 2 and the third pyranometer 3 are arranged to face the sun, for example, if the device is deployed in the Northern Hemisphere, the azimuth angle of the measuring surface of the second pyranometer 2 is A (e.g., 60 degrees south by east), and the azimuth angle of the measuring surface of the third pyranometer 3 is B (e.g., 60 degrees south by west). The sum of the azimuth angles of the measuring surfaces of the second and third pyranometers 2 and 3 is 360 degrees, and the tilt angles of the measuring surfaces of the second and third pyranometers 2 and 3 are the same, i.e., the angle between the measuring surface of the second pyranometer 2 and the horizontal ground is the same as the angle between the measuring surface of the third pyranometer 3 and the horizontal ground. That is, both the measuring surfaces of the second pyranometer 2 and the third pyranometer 3 are arranged to face the sun symmetrically with respect to the meridian plane.

The first pyranometer 1 is configured to measure the horizontal irradiance, the second pyranometer 2 is configured to measure the first slope irradiance, and the third pyranometer 3 is configured to measure the second slope irradiance. The first pyranometer 1, second pyranometer 2 and third pyranometer 3 are all connected to the processing unit, and transmit the measured horizontal irradiance, the first slope irradiance, and the second slope irradiance to the processing unit. The processing unit determines the azimuth irradiation deviation rate according to the horizontal irradiance, the first slope irradiance and the second slope irradiance, and determines a weather condition according to the horizontal irradiance, the first slope irradiance, the second slope irradiance and the azimuth irradiation deviation rate.

By means of the device for determining weather conditions provided by embodiments of the present disclosure, a weather condition is determined simultaneously with the measurement of the irradiance data, so that the diversity of the device's functionality is enhanced, the manufacturing and installation are simplified, along with low maintenance costs. At the same time, it is suitable for all latitudes and seasons, has low costs, high feasibility, and can be widely applied in engineering practice.

In one embodiment of the present disclosure, the processing unit determines the ratio of the absolute value of the difference between the first and second slope irradiances to the horizontal irradiance as the azimuth irradiation deviation rate.

The closer the weather condition is to clear day, the greater the difference in azimuth irradiances, and the closer the weather condition to overcast or rainy day, the smaller the difference in azimuth irradiances. Thus, when the difference between the first and second slope irradiances is small, and the horizontal irradiance is greater than both the first and second slope irradiances, the weather condition will be closer to overcast or rainy condition. Actual measurement data show that the weather condition is overcast or rainy, when the horizontal irradiance is greater than both the first and second slope irradiances, and the azimuth irradiation deviation rate D is less than 5%.

Thus, in one embodiment of the present disclosure, the processing unit compares the horizontal irradiance with the first slope irradiance and the second slope irradiance, respectively, and determines the weather condition as overcast or rainy, when the horizontal irradiance is greater than both the first and second slope irradiances, and the azimuth irradiation deviation rate D is less than 5%.

As can be seen from the above content, the weather condition can be determined to be either clear or cloudy, when the condition that the horizontal irradiance is greater than both the first and second slope irradiances and the azimuthal irradiation deviation rate is less than 5% is not met.

In one embodiment of the present disclosure, when the condition that the horizontal irradiance is greater than both the first and second slope irradiances and the azimuth irradiation deviation rate D is less than 5% is not met, based on the horizontal irradiance and a direct irradiation proportion (for example, 50%) within a predefined range (for example, 50-60%), a first theoretical slope irradiance and a second theoretical slope irradiance are calculated according to a slope irradiation calculation model:

$$I_{slope} = I_n * R_b + I_d * R_d + \frac{1-\cos(a)}{2}(I_d + I_n) * \rho,$$

respectively, wherein $I_n$ represents the horizontal direct irradiance, $I_d$ represents the horizontal diffuse irradiance, $\rho$ represents the ground reflectance,

$$R_b = \frac{\cos\theta_i}{\cos\theta_z},$$

wherein $\theta_z$ represents the solar zenith angle, $\theta_i$ represents the solar incidence angle,

$$\cos\theta_z = \sin\varphi\sin\delta + \cos\varphi\cos\delta\cos\omega,$$

$$\cos\theta_i = \sin\varphi\sin\delta\cos a - \cos\varphi\sin\delta\sin a\cos\gamma + \cos\varphi\cos\delta\cos a\cos\omega +$$
$$\cos\delta\sin\varphi\sin a\cos\gamma\cos\omega + \cos\delta\sin a\sin\gamma\sin\omega,$$

where $\omega$ represents the solar hour angle, $\delta$ represents the declination angle, $\varphi$ represents the latitude, $\gamma$ represents the azimuth angle of the slope, and a represents the tilt angle of the slope;

$$R_d = F_{Hay} * R_b + (1 - F_{Hay})(\frac{1+\cos(a)}{2} * \frac{2}{3} + \frac{1}{3} * \frac{180-a}{180}),$$

wherein $F_{Hay}$ is the sky clearness factor;

According to the first and second theoretical slope irradiances, the ratio of the absolute value of the difference between the first theoretical slope irradiance and the second theoretical slope irradiance to the horizontal irradiance is determined as an azimuth irradiation theoretical deviation rate $D_{theo.}$; and according to the first and second slope irradiances, the ratio of the difference between the first slope irradiance and the second slope irradiance to the horizontal irradiance is determined as an azimuth irradiation actual deviation rate $D_{act.}$;

The weather condition is determined as clear, when the azimuth irradiation actual deviation rate $D_{act.}$ is greater than the azimuth irradiation theoretical deviation rate $D_{theo.}$; and the weather condition is determined as cloudy, when the azimuth irradiation actual deviation rate $D_{act.}$ is less than the azimuth irradiation theoretical deviation rate $D_{theo.}$

In the above embodiment, taking a direct irradiation proportion (for example, 50%) within a predefined range (for example, 50-60%) as an example, it is illustrated how the processing unit determines the weather condition according to the horizontal irradiance, the first slope irradiance, the second slope irradiance and the azimuth irradiation deviation rate, when the conditions that the horizontal irradiance is greater than both the first and second slope irradiances, and the azimuth irradiation deviation rate D is less than 5% is not met.

In one embodiment of the present disclosure, the predefined range is greater than or equal to 50% and less than or equal to 60%.

In one embodiment of the present disclosure, the direct irradiation proportion is 50%.

By predefining different proportions of the horizontal direct irradiance In in the total irradiance, the weather condition can also be determined according to the horizontal irradiance, the first slope irradiance, the second slope irradiance and the azimuth irradiation deviation rate.

In one embodiment of the present disclosure, the processing unit is configured to, when the conditions that the horizontal irradiance is greater than both the first and second slope irradiances, and the azimuth irradiation deviation rate D is less than 5% is not met, based on the horizontal irradiance and a plurality of direct radiation proportions uniformly distributed within the range of 0 to 100%, a first theoretical slope irradiance and a second theoretical slope irradiance at different direct radiation proportions are calculated according to a slope irradiation calculation model:

$$I_{slope} = I_n * R_b + I_d * R_d + \frac{1-\cos(a)}{2}(I_d + I_n) * \rho$$

, respectively, wherein In represents the horizontal direct irradiance, Id represents the horizontal diffuse irradiance, $\rho$ represents the ground reflectance, $R_b = \frac{\cos\theta_i}{\cos\theta_z}$, wherein $\theta_z$ represents the solar zenith angle, $\theta_i$ represents the solar incidence angle, and the different direct irradiation proportions refer to the varying values of In/ (In+Id),

$$\cos\theta_z = \sin\varphi\sin\delta + \cos\varphi\cos\delta\cos\omega,$$

$$\cos\theta_i = \sin\varphi\sin\delta\cos a - \cos\varphi\sin\delta\sin a\cos\gamma + \cos\varphi\cos\delta\cos a\cos\omega + \cos\delta\sin\varphi\sin a\cos\gamma\cos\omega + \cos\delta\sin a\sin\gamma\sin\omega,$$

where $\omega$ represents the solar hour angle, $\delta$ represents the declination angle, $\varphi$ represents the latitude, $\gamma$ represents the azimuth angle of the slope, and a represents the tilt angle of the slope;

$$R_d = F_{Hay} * R_b + (1 - F_{Hay}) \left(\frac{1+\cos(a)}{2} * \frac{2}{3} + \frac{1}{3} * \frac{180-a}{180}\right)$$

, wherein $F_{Hay}$ is the sky clearness factor.

The processing unit is further configured to determine the ratio of the difference between the first theoretical slope irradiance and the second theoretical slope irradiance at different direct irradiation proportions to the horizontal irradiance as an azimuth irradiation theoretical deviation rate $D_{theo.}$ at the different direct irradiation proportions;

Select an azimuth irradiation theoretical deviation rate $D_{theo.}$ closest to the azimuth irradiation deviation rate, and determine the direct irradiation proportion corresponding to this selected azimuth irradiation theoretical deviation rate $D_{theo.}$ as an actual direct irradiation proportion; and

determine a weather condition according to the actual direct irradiation proportion.

For example, if the direct irradiation proportion is 30%, it is cloudy weather; if the direct irradiation proportion is 70%, it is clear.

Determining the current weather condition according to the actual direct irradiation proportion comprises: determining the weather condition as clear when the actual direct irradiation proportion is greater than a first threshold; determining the weather condition as overcast or rainy when the actual direct irradiation proportion is less than a second threshold; and determining the weather condition as cloudy when the actual direct irradiation proportion is less than or equal to the first threshold and greater than or equal to the second threshold.

For example, the first threshold is 50%, and the second threshold may be 10%.

In the device for determining weather conditions according to the embodiments of the present disclosure, the set orientations of the second and third pyranometers are fixed. When the device is deployed in low-latitude regions (i.e., between the Tropic of Cancer and the Tropic of Capricorn), because the sun's direct point moves between the Tropic of Cancer and the Tropic of Capricorn, the situation that the measuring surfaces of the second and third pyranometers are both facing away from the sun will occur. The measuring surface of the second pyranometer being facing away from the sun means that when the azimuth angle of the second pyranometer is south by east or south by west, the sun's direct point is located to the north of the second pyranometer, and also that when the azimuth angle of the second pyranometer is north by east or north by west, the sun's direct point is located to the south of the second pyranometer. In such cases, it cannot be used to determine weather conditions.

To address this, in one embodiment of the present disclosure, the device for determining weather conditions further comprises a fourth pyranometer and a fifth pyranometer, wherein the fourth pyranometer is arranged to be symmetrical with the second pyranometer about a plane that is perpendicular to the horizontal plane and parallel to the latitude line, and the fifth pyranometer is arranged to be symmetrical with the third pyranometer about a plane that is perpendicular to the horizontal plane and parallel to the latitude line; wherein, the processing unit uses the measurement data of the fourth pyranometer as the first slope irradiance and the measurement data of the fifth pyranometer as the second slope irradiance, respectively, when both the second and third pyranometers are facing away from the sun.

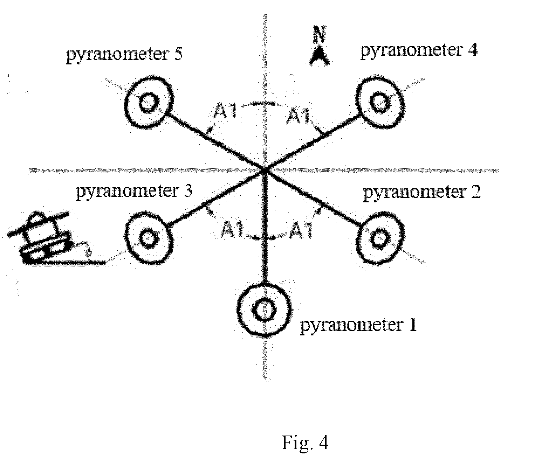

Figure 4 shows the structure of a device for determining weather conditions according to another embodiment of the present disclosure. As shown in Figure 4, the device for determining weather conditions further comprises a fourth pyranometer 4 (i.e., pyranometer 4) and a fifth pyranometer 5 (i.e., pyranometer 5), wherein the arrangement of the second pyranometer 2 and the third pyranometer 3 is the same as that in Figure 3. The fourth pyranometer 4 is symmetric to the second pyranometer 2 with respect to a plane that is perpendicular to the horizontal plane and parallel to the latitude line. The fifth pyranometer 5 is symmetric to the third pyranometer 3 with respect to a plane that is perpendicular to the horizontal plane and parallel to the latitude line. The fourth pyranometer 4 and the fifth pyranometer 5 are symmetric with respect to the meridian plane.

With the arrangement of the fourth and fifth pyranometers, when both the second and third pyranometers are facing away from the sun, the fourth and fifth pyranometers can be activated, allowing the device to continue determining the weather condition.

In one embodiment of the present disclosure, the device for determining weather conditions further comprises a rotating mechanism. The second and third pyranometers are mounted on the rotating mechanism. When both the second and third pyranometers are facing away from the sun, the rotating mechanism drives the second and third pyranometers to rotate by 180 degrees in the horizontal plane, so that they face the sun again.

By comprising a rotating mechanism, when the sun's direct point moves and causes the second and third pyranometers to face away from the sun, the rotating mechanism can drive the second and third pyranometers to rotate by 180 degrees in the horizontal plane, allowing the device for determining weather conditions to resume operation, thereby improving the device's applicability.

The method and device for determining weather conditions according to the present disclosure measure the irradiation situation in different orientations and then identify a weather condition according to different azimuth irradiation deviation rates. The weather condition is determined simultaneously with the measurement of the irradiance data, so that the diversity of the device's functionality is enhanced, the manufacturing and installation are simplified, along with low maintenance costs. At the same time, it is suitable for all latitudes and seasons, has low costs, high feasibility, and can be widely applied in engineering practice.

In the description of this application, it should be noted that terms such as "upper," "lower," "inner," "outer," "front," "rear," "left," and "right" indicate the orientation or positional relationship based on the working state of the application. These terms are used only to facilitate the description of the application and to simplify the description, and do not indicate or imply that the device or components must have a specific orientation or be constructed and operated in a specific orientation. Therefore, they should not be construed as limiting the application.

In the description of this application, it should be noted that unless otherwise explicitly specified and defined, terms such as "install," "connect," and "link" should be interpreted broadly. Those skilled in the art can understand the specific meanings of these terms in the context of this application based on specific situations.

The above description combines preferred embodiments to explain the application, but these embodiments are only exemplary and serve only illustrative purposes. On this basis, various substitutions and modifications can be made to the application, all of which fall within the scope of protection of the application.

**Claims**

1. A method for determining weather conditions, comprising:

   measuring a horizontal irradiance;
   measuring a first slope irradiance and a second slope irradiance, wherein the first and second slopes are arranged to face the sun symmetrically with respect to the meridian plane;
   determining an azimuth irradiation deviation rate according to the horizontal irradiance, the first slope irradiance, and the second slope irradiance; and
   determining a weather condition according to the horizontal irradiance, the first slope irradiance, the second slope irradiance and the azimuth irradiation deviation rate.

2. The method according to claim 1, wherein determining the azimuth irradiation deviation rate according to the horizontal irradiance, the first slope irradiance, and the second slope irradiance comprises:
   determining the ratio of the absolute value of the difference between the first and second slope irradiances to the horizontal irradiance as the azimuth irradiation deviation rate D.

3. The method according to claim 2, wherein determining the weather condition according to the horizontal irradiance, the first slope irradiance, the second slope irradiance and the azimuth irradiation deviation rate comprises:
   determining the weather condition as overcast or rainy, when the horizontal irradiance is greater than both the first and second slope irradiances, and the azimuth irradiation deviation rate D is less than 5%.

4. The method according to claim 2, further comprising:

obtaining a first theoretical slope irradiance and a second theoretical slope irradiance according to a slope irradiation calculation model, respectively, based on the horizontal irradiance and a direct irradiation proportion within a predefined range, when the condition that the horizontal irradiance is greater than both the first and second slope irradiances and the azimuth irradiation deviation rate D is less than 5% is not met;
determining an azimuth irradiation theoretical deviation rate $D_{theo.}$ of the first theoretical slope irradiance and the second theoretical slope irradiance according to the first and second theoretical slope irradiances, and determining an azimuth irradiation actual deviation rate $D_{act.}$ according to the first and second slope irradiances;
determining the weather condition as clear, when the azimuth irradiation actual deviation rate $D_{act.}$ is greater than the azimuth irradiation theoretical deviation rate $D_{theo.}$; and
determining the weather condition as cloudy, when the azimuth irradiation actual deviation rate $D_{act.}$ is less than or equal to the azimuth irradiation theoretical deviation rate $D_{theo.}$.

5. The method according to claim 4, wherein the predefined range is greater than or equal to 50% and less than or equal to 60%.

6. The method according to claim 4, wherein the direct irradiation proportion is 50%.

7. The method according to claim 2, further comprising:

obtaining a first theoretical slope irradiance and a second theoretical slope irradiance at different direct irradiation proportions according to a slope irradiation calculation model, respectively, based on the horizontal irradiance and a plurality of direct radiation proportions uniformly distributed within the range of 0 to 100%, when the conditions that the horizontal irradiance is greater than both the first and second slope irradiances and the azimuth irradiation deviation rate D is less than 5% is not met;
determining an azimuth irradiation theoretical deviation rate $D_{theo.}$ at different direct irradiation proportions according to the first and second theoretical slope irradiances at the different direct irradiation proportions and the horizontal irradiance;
selecting an azimuth irradiation theoretical deviation rate $D_{theo.}$ closest to the azimuth irradiation deviation rate, and determining a direct irradiation proportion corresponding to the selected azimuth irradiation theoretical deviation rate $D_{theo.}$ as an actual direct irradiation proportion; and
determining a current weather condition according to the actual direct irradiation proportion.

8. The method according to claim 7, wherein determining the current weather condition according to the actual direct irradiation proportion comprises:

determining the weather condition as clear, when the actual direct irradiation proportion is greater than a first threshold; and
determining the weather condition as overcast, when the actual direct irradiation proportion is less than a second threshold; and
determining the weather condition as cloudy, when the actual direct irradiation proportion is less than or equal to the first threshold and greater than or equal to the second threshold.

9. The method according to claim 8, wherein the first threshold is 50%, and the second threshold is 10%.

10. A device for determining weather conditions, comprising:

a first pyranometer configured to measure a horizontal irradiance, wherein a measuring surface of the first pyranometer is arranged to be horizontally placed;
a second pyranometer configured to measure a first slope irradiance;
a third pyranometer configured to measure a second slope irradiance, wherein the measuring surface of the second pyranometer and a measuring surface of the third pyranometer are arranged to face the sun symmetrically with respect to the meridian plane; and
a processing unit configured to receive the horizontal irradiance, the first slope irradiance, and the second slope irradiance, determine an azimuth irradiation deviation rate according to the horizontal irradiance, the first slope irradiance and the second slope irradiance, and determine a weather condition according to the horizontal irradiance, the first slope irradiance, the second slope irradiance and the azimuth irradiation deviation rate.

11. The device according to claim 10, wherein the processing unit is further configured to determine the ratio of the absolute value of the difference between the first and second slope irradiances to the horizontal irradiance as the azimuth irradiation deviation rate.

12. The device according to claim 10, wherein the processing unit is further configured to compare the horizontal irradiance with the first slope irradiance and compare the horizontal irradiance with the second slope irradiance, and the processing unit determines the weather condition as overcast or rainy, when the horizontal irradiance is greater than both the first and second slope irradiances, and the azimuth irradiation deviation rate is less than 5%.

13. The device according to claim 10, wherein the processing unit is further configured to obtain a first theoretical slope irradiance and a second theoretical slope irradiance according to a slope irradiation calculation model, respectively, based on the horizontal irradiance and a direct irradiation proportion within a predefined range, when the condition that the horizontal irradiance is greater than both the first and second slope irradiances and the azimuth irradiation deviation rate is less than 5% is not met;

the processing unit is further configured to determine an azimuth irradiation theoretical deviation rate $D_{theo.}$ of the first theoretical slope irradiance and the second theoretical slope irradiance according to the first and second theoretical slope irradiances, and determine an azimuth irradiation actual deviation rate $D_{act.}$ based on the first and second slope irradiances;
the processing unit determines the weather condition as clear, when the azimuth irradiation actual deviation rate $D_{act.}$ is greater than the azimuth irradiation theoretical deviation rate $D_{theo.}$; and the processing unit determines the weather condition as cloudy, when the azimuth irradiation actual deviation rate $D_{act.}$ is less than or equal to the azimuth irradiation theoretical deviation rate $D_{theo.}$.

14. The device according to claim 13, wherein the predefined range is greater than or equal to 50% and less than or equal to 60%.

15. The device according to claim 13, wherein the direct irradiation proportion is 50%.

16. The device according to claim 10, wherein the processing unit is further configured to obtain a first theoretical slope irradiance and a second theoretical slope irradiance at different direct irradiation proportions according to a slope irradiation calculation model, respectively, based on the horizontal irradiance and a plurality of direct radiation proportions uniformly distributed within the range of 0 to 100%, when the condition that the horizontal irradiance is greater than both the first and second slope irradiances and the azimuth irradiation deviation rate is less than 5% is not met;

the processing unit is further configured to determine an azimuth irradiation theoretical deviation rate $D_{theo.}$ at different direct irradiation proportions according to the first and second theoretical slope irradiances at the different direct irradiation proportions and the horizontal irradiance;
select an azimuth irradiation theoretical deviation rate $D_{theo.}$ closest to the azimuth irradiation deviation rate, and determine an direct irradiation proportion corresponding to the selected azimuth irradiation theoretical deviation rate $D_{theo.}$ as an actual direct irradiation proportion; and
determine a current weather condition according to the actual direct irradiation proportion.

17. The device according to claim 16, wherein the processing unit is configured to determine the current weather condition according to the actual proportion of direct radiation, particularly,
the processing unit is configured to:

determine the weather condition as clear, when the actual direct irradiation proportion is greater than a first threshold;
determine the weather condition as overcast or rainy, when the actual direct irradiation proportion is less than a second threshold; and
determine the weather condition as cloudy, when the actual direct irradiation proportion is less than or equal to the first threshold and greater than or equal to the second threshold.

**18.** The device according to claim 17, wherein the first threshold is 50%; and the second threshold is 10%.

**19.** The device according to claim 10, further comprising a fourth pyranometer and a fifth pyranometer, wherein:

the fourth pyranometer is arranged to be symmetrical with the second pyranometer about a plane that is perpendicular to the horizontal plane and parallel to the latitude line.
the fifth pyranometer is arranged to be symmetrical with the third pyranometer about a plane that is perpendicular to the horizontal plane and parallel to the latitude line;
wherein, the processing unit uses the measurement data of the fourth pyranometer as the first slope irradiance and the measurement data of the fifth pyranometer as the second slope irradiance, respectively, when both the second and third pyranometers are facing away from the sun.

**20.** The device according to claim 10, further comprising a rotating mechanism, the second and third pyranometers are arranged on the rotating mechanism, when both the second and third pyranometers are facing away from the sun, the rotating mechanism drives the second and third pyranometers to rotate by 180 degrees in the horizontal plane so as to face the sun again.

measure horizontal irradiance

measure first slope irradiance and second slope irradiance

determine azimuth irradiation deviation rate according to horizontal irradiance, first slope irradiance and second slope irradiance

when horizontal irradiance is greater than both first and second slope irradiances, determine whether azimuth irradiation deviation rate < 5%

Y → determine weather condition as overcast or rainy

N

determine azimuth irradiation theoretical deviation rate according to direct irradiation proportion within predefined range

determine azimuth irradiation actual deviation rate

determine whether azimuth irradiation actual deviation rate is greater than azimuth irradiation theoretical deviation rate

N → determine weather condition as cloudy

Y

determine weather condition as clear

Fig. 1

Fig. 2

Fig.3

Fig. 4

## INTERNATIONAL SEARCH REPORT

| International application No. |
|---|
| **PCT/CN2023/121731** |

### A. CLASSIFICATION OF SUBJECT MATTER

G01W1/00(2006.01)i; G01W1/02(2006.01)i

According to International Patent Classification (IPC) or to both national classification and IPC

### B. FIELDS SEARCHED

Minimum documentation searched (classification system followed by classification symbols)

IPC:G01W1,G01J1

Documentation searched other than minimum documentation to the extent that such documents are included in the fields searched

Electronic data base consulted during the international search (name of data base and, where practicable, search terms used)

CNTXT, ENTXTC, DWPI, VEN, CNKI, CJFD, WFNPL: 辐照, 辐射, 水平, 第二, 第三, 斜, 水平, 子午, 对称, 天气, 云, 遮, 挡, 伪阴天, 多云, 假阴天, 晴天, 方位辐照偏差, irradia+, horizontal, incline, obliquity, second, 2nd, 3rd, third, symmetr+, meridian plane, fake, cloud?, overcast, sunny, deviation

### C. DOCUMENTS CONSIDERED TO BE RELEVANT

| Category* | Citation of document, with indication, where appropriate, of the relevant passages | Relevant to claim No. |
|---|---|---|
| A | CN 111596381 A (TRINA SOLAR CO., LTD.) 28 August 2020 (2020-08-28) description, paragraphs 0002-0121, and figures 1-4 | 1-20 |
| PX | CN 116007745 A (TRINA SOLAR CO., LTD.) 25 April 2023 (2023-04-25) description, paragraphs 0002-0141, and figures 1-4 | 1-20 |
| A | US 2013314699 A1 (JUNGERMAN ROGER L et al.) 28 November 2013 (2013-11-28) entire document | 1-20 |
| A | CN 113364408 A (POWERCHINA HUADONG ENGINEERING CORP., LTD. et al.) 07 September 2021 (2021-09-07) entire document | 1-20 |
| A | US 2014149038 A1 (ARIZONA STATE UNIVERSITY) 29 May 2014 (2014-05-29) entire document | 1-20 |
| A | CN 103809617 B (TAIYUAN UNIVERSITY OF SCIENCE AND TECHNOLOGY) 17 August 2016 (2016-08-17) entire document | 1-20 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 January 2024** | **10 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/121731**

**C.    DOCUMENTS CONSIDERED TO BE RELEVANT**

| Category* | Citation of document, with indication, where appropriate, of the relevant passages | Relevant to claim No. |
|---|---|---|
| A | CN 111121956 A (INSTITUTE OF ADVANCED TECHNOLOGY, UNIVERSITY OF SCIENCE AND TECHNOLOGY OF CHINA) 08 May 2020 (2020-05-08) entire document | 1-20 |

Form PCT/ISA/210 (second sheet) (July 2022)

**INTERNATIONAL SEARCH REPORT**
Information on patent family members

International application No.

**PCT/CN2023/121731**

| Patent document cited in search report | | | Publication date (day/month/year) | Patent family member(s) | Publication date (day/month/year) |
|---|---|---|---|---|---|
| CN | 111596381 | A | 28 August 2020 | None | |
| CN | 116007745 | A | 25 April 2023 | None | |
| US | 2013314699 | A1 | 28 November 2013 | None | |
| CN | 113364408 | A | 07 September 2021 | None | |
| US | 2014149038 | A1 | 29 May 2014 | None | |
| CN | 103809617 | B | 17 August 2016 | None | |
| CN | 111121956 | A | 08 May 2020 | None | |

Form PCT/ISA/210 (patent family annex) (July 2022)